# EUROPEAN PATENT SPECIFICATION

(11) **EP 0 953 087 B1**
(45) Date of publication and mention of the grant of the patent: **12.05.2004**
(21) Application number: 96939634.0
(22) Date of filing: 12.11.1996
(51) Int. Cl.: E04B 2/00, E04B 2/74

(54) **MULTIPLE PANEL ASSEMBLY AND CONNECTOR ASSEMBLY THEREFOR**
ANORDNUNG VON MEHREREN PANEELEN UND VERBINDUNGSSYSTEM DAFÜR
ASSEMBLAGE DE PANNEAUX MULTIPLES ET SYSTEME DE CONNECTEUR POUR CET ASSEMBLAGE

(43) Date of publication of application: 03.11.1999
(73) Proprietor: SHAPE CORPORATION, Grand Haven, Michigan 49417 (US)
(72) Inventor: STURRUS, Peter, Grand Haven, MI 49417 (US)
(74) Representative: Miller, James Lionel Woolverton
(86) International application number: PCT/US1996/018033
(87) International publication number: WO 1998/021424

(56) References cited:
- EP-A- 0 459 653
- US-A- 3 430 997
- US-A- 3 517 467
- US-A- 4 375 010
- US-A- 5 058 347
- US-A- 5 251 413

## Description

This invention relates to a multiple panel assembly and more particularly, to a panel connector assembly for connecting and locking the opposing edges of two adjacent panel edges together. More particularly, this invention relates to improvement in the panel connector assembly of U.S. Patent 3,430,997, issued on March 4, 1969, and entitled PANEL JOINT.

### BACKGROUND OF THE INVENTION

More than 28 years ago, the panel joint of U.S. Patent 3,430,997 was invented and developed and has been manufactured and sold as a major product of the assignee of such patent since that time. Very little, if any, changes have been made by the assignee in manufacture of the panel connector assembly since its inception, despite the fact that the assignee has made and sold many inventions in space divider systems in which a in plurality of vertically oriented panels are interlocked at their adjacent edges to be used in what has become known as landscape furniture arrangements.

Throughout this more than 25-year span, there obviously has existed a need for reducing the cost of space divider systems and particularly, the panel connector assemblies for connecting and locking the opposing edges of the panels together. Despite this need, the connector assembly as disclosed in U.S. Patent 3,430,997 has been manufactured with very little changes and sold by the assignee of said patent in great volumes.

Specifically, as disclosed in U.S. Patent 3,430,997, the panel connector assembly for each of the edges of the panels has comprised four parts, including a U-shaped channel first connected to the edge of the panel and a hanger bracket assembly provided with a plurality of aligned slots for receiving clips extending from the joint of the panels to support many types of accessories. The hanger brackets extend substantially the entire height of the panels and has upper and lower wedging members affixed within the U-shaped channels at the facing edges of the panels. Thus, for each edge of each panel, four distinct, separate parts are required. These parts are not only costly to produce, but also to assembly on the edge of the panels.

EP0459653A2 discloses a panel connector arrangement in which a seating hook and a clamp device are employed to removably join two panels.

### SUMMARY OF INVENTION

According to the invention a panel assembly has the features of claim 1. Various optional features are set out in the dependent claims.

The invention relates to an improvement on the panel connector assembly of U.S. Patent 3,430,997. In accordance with this invention, the four parts mounted on the edge of the panels are replaced by one part that produces the triple function of providing a hanger bracket, wedging means, and flange means for hiding portions of the hanger bracket. All these functions, in accordance with this invention, are accomplished with one hanger bracket/connector strip, thus reducing the cost of three additional parts and simplifying the mounting of the connector to the edges of the panels.

In accordance with this invention, the shape of the hanger bracket is modified so as to provide flanges that eliminate the requirement for the U-shaped channels. The configuration of the hanger bracket is also modified to provide wedging pockets at their upper and lower ends that eliminate the separate wedging members of U.S. Patent 3,430,997. In accordance with this invention, there are two embodiments. One of the embodiments will accommodate the presently utilized upper and lower wedge mating members as described in U.S. Patent 3,430,997. The second embodiment involves a redesign of the upper and lower edge mating members, all of which will be readily understood by reference to the following specification and accompanying figures.

### BRIEF DESCRIPTION OF THE DRAWINGS

Fig. 1 is an exploded view of the various parts of the panel connector assembly;
Fig. 2 is a side-elevational view of one embodiment of the hanger bracket/connector strip of this invention;
Fig. 3 is a plan view of the hanger bracket/connector strip of Fig. 2;
Fig. 4 is a perspective view of an end portion of the hanger bracket/connector strip of Figs. 2 and 3;
Fig. 5 is a side-elevational view of two panels connected together along their edges by the hanger bracket/connector strips of Figs. 1-4 and upper and lower wedge mating members with tie rod as disclosed in Fig. 1;
Fig. 5A is a cross-sectional view taken along the plane VA-VA of Fig. 5;
Fig. 5B is a cross-sectional view taken along the plane VB-VB of Fig. 5;
Fig. 6 is a cross-sectional view taken along the plane VI-VI of Fig. 3;
Fig. 7 is a perspective view of one of the wedge mating members disclosed in Figs. 1 and 5;
Fig. 8 is side-elevational view of a second embodiment of the hanger bracket/connector strip;
Fig. 9 is a plan view of the hanger bracket/connector strip of Fig. 8;
Fig. 10 is a perspective view of an end portion of the hanger bracket/connector strip of Figs. 8 and 9;
Fig. 11 is a perspective view of one of the wedge mating members utilized with the hanger bracket/connector strip of Figs. 8, 9, and 10;
Fig. 12 is a side-elevational view of two panels connected together utilizing the hanger bracket/connector strip of Figs. 8, 9, and 10 and wedge mating members like that disclosed in Fig. 11;
Fig. 12A is a cross-sectional view taken along the plane XIIA-XIIA of Fig. 12;
Fig. 13 is a perspective view of a wedge mating member designed to connect the edges of two panels together in which one panel utilizes the hanger bracket/connector strip of Figs. 8, 9, and 10 and the other panel utilizes the hanger bracket and connector assembly as disclosed in U.S. Patent 3,430,997;
Fig. 14 is a side-elevational view of two panels connected together by the hanger bracket/connector strip of Figs. 8, 9, and 10 and the connector and hanger bracket assembly of U.S. Patent 3,430,997;
Fig. 14A is a cross-sectional view taken along the plane XIVA-XIVA of Fig. 14;
Fig. 15 is a side-elevational view of two panels connected together by a hanger bracket/connector strip of Figs. 2, 3, and 4 and the connector and hanger bracket assembly of U.S. Patent 3,430,997; and
Fig. 15A is a cross-sectional view taken along the plane XVA-XVA of Fig. 15.

### DETAILED DESCRIPTION OF THE PREFERRED EMBODIMENT

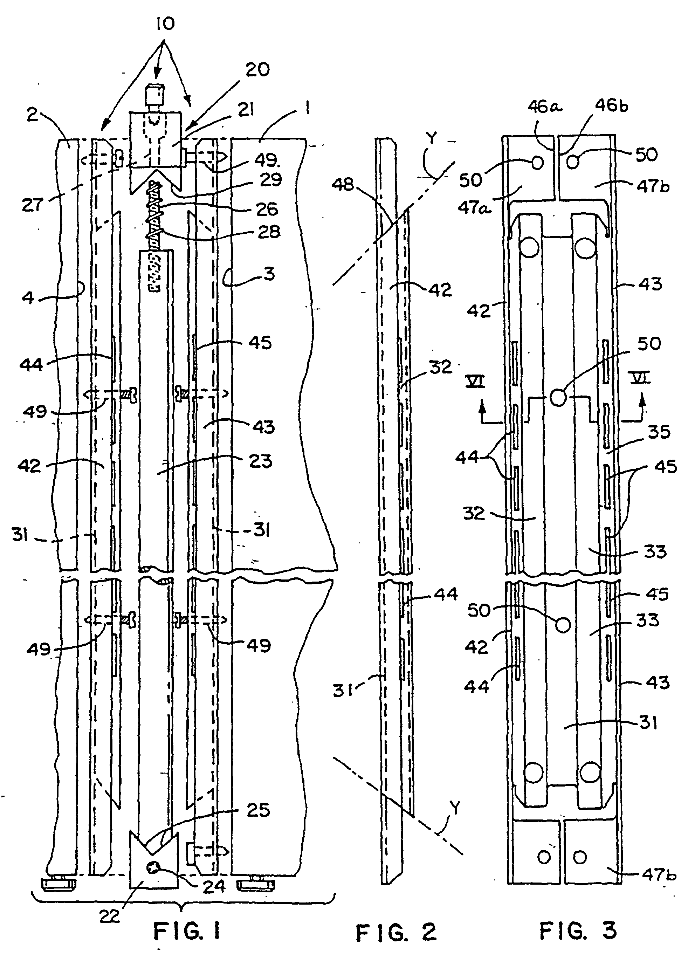

Referring to the drawings, Fig. 1 discloses an exploded view of a pair of spaced divider panels 1 and 2 having the upright edges 3 and 4 adapted to be secured together by the hanger bracket/connector assembly 10 which includes the panel interlock assembly 20 comprising an upper wedging draw block 21 and a lower wedging draw block 22 connected together by an elongated tie rod or bar 23. The lower wedging draw block 22 is secured to the tie rod 23 by any conventional means such as a screw or bolt 24. The lower wedging draw block 22 has upwardly directed, generally V-shaped wedging surfaces 25 provided to be received in sockets located at the lower ends of the hanger bracket/connector strips 30 as will be described hereinafter. The upper wedging draw block 21 is adjustably affixed to the upper extremity of the tie bar 23 by means of an elongated screw member 26. The tie rod 23 is preferably fabricated from a piece of metallic tubing tapped at its upper extremity, and the elongated screw member 26 is screwed directly therein. The screw 26 passes through aperture 27 in the upper draw block 21. A compression spring 28 is provided to prevent the upper wedging block 21 from sliding down on bolt 26 so as to assist in the assembly and disassembly of the panel joint as will become apparent. The upper draw block 21 is also provided with generally V-shaped wedging surfaces 29 which are adapted to be received in sockets provided on the hanger/connector strips as will be described hereinafter.

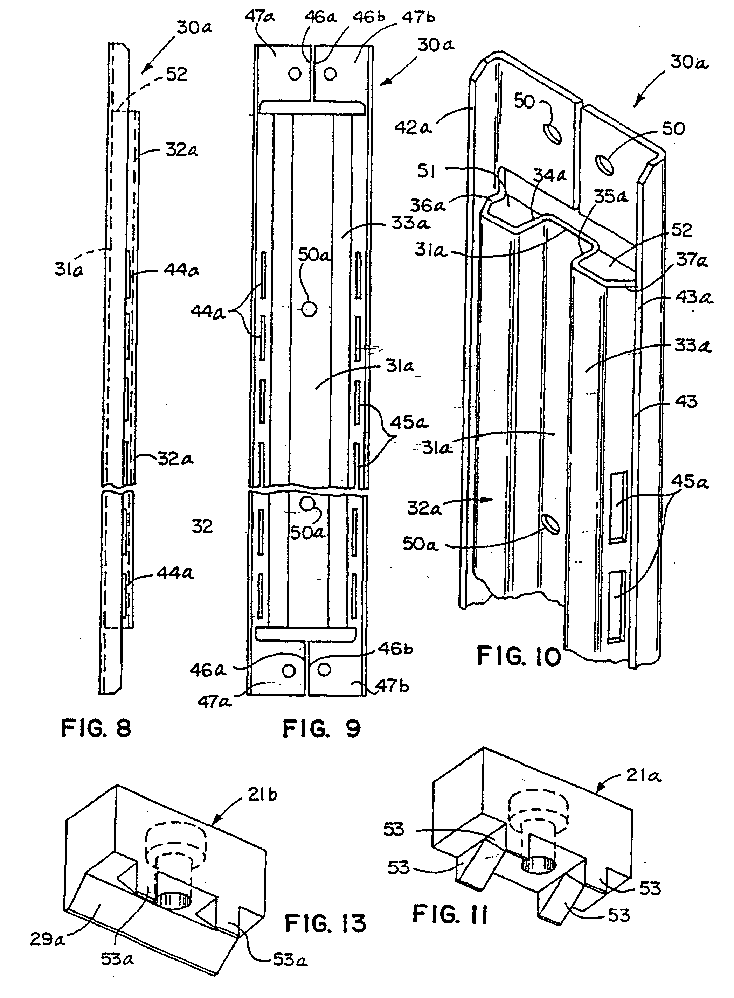

Each hanger bracket/connector strip 30 is formed from a single piece of steel and has a configuration as disclosed in Figs. 2, 3, 4, and 6. Fig. 6 shows a cross section of the hanger bracket/connector strip 30. It discloses a flat central portion 31 located on the plane X which, when assembled on the edge of a panel, the surface of the panel lies on the same plane X as the flat central portion. U-shaped protruding bent portions 32 and 33 are located on each end of the flat central portion 31 and extend away from the plane X. The U-shaped protruding bent portions 32 and 33 include the inner legs 34 and 35, the outer legs 36 and 37, and the webs or bite portions 38 and 39, respectively..Outer legs 36 and 37 are connected to the reverse bent portions 40 and 41, respectively, and extending from the reverse bent portions 40 and 41 are the flanges 42 and 43, respectively.

The outer legs 36 and 37 include the elongated slots 44 and 45 spaced longitudinally along the strip 30 for receiving accessory hooks so as to support accessories on the panels.

It will be noted from Figs. 1 and 2 that the flanges 42 and 43 are of a length to slightly overlap the elongated slots 44 and 45, respectively. Thus, the slots are just sufficiently exposed to permit the easy insertion of the accessory hooks while at the same time sufficiently covering the slots when viewed from the front of the panel so as to add to the aesthetic properties of the overall panel system.

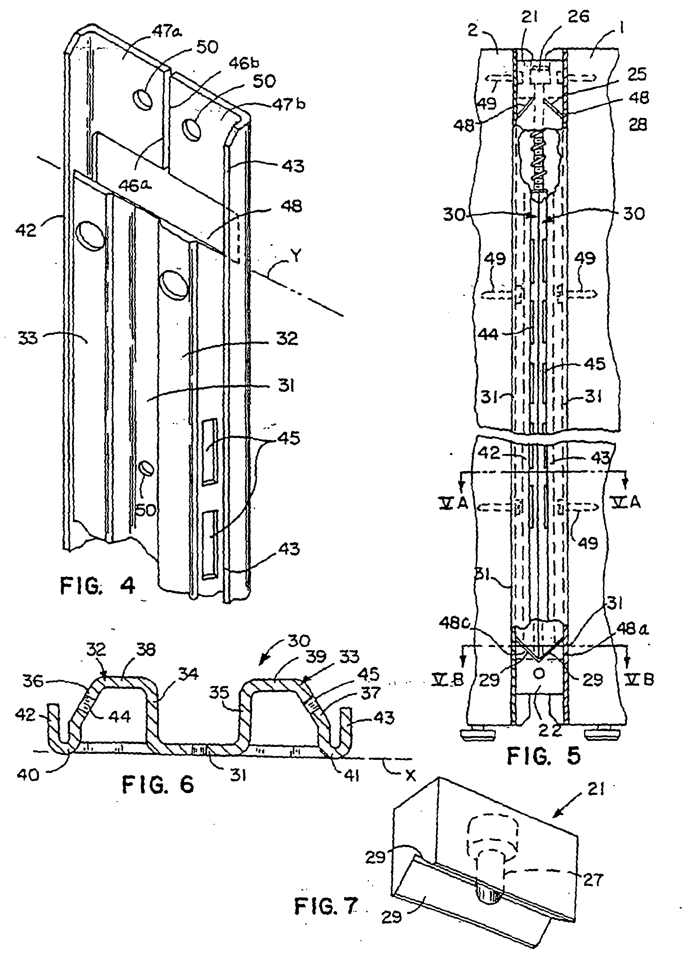

The strip 30 is primarily formed by roll-forming and bending a single sheet of steel. However, at the extreme ends thereof, the U-shaped protruding portions are cut to provide the configuration as disclosed in Figs.- 2, 3, and 4. Specifically, the protruding portions at the very extreme end are cut along the severance lines 46a and 46b and then flattened to provide the flat surfaces 47a and 47b. Further, the U-shaped protruding portions are cut along the inclined plane Y (Figs. 2 and 4). The cuts are made without disturbing the flanges 42 and 43. The cuts provide a socket 48 for receiving the wedging surfaces 25 and 29 of the wedging draw blocks 21 and 22, respectively, it being understood that the upper and lower ends of the strip 30 are identical. Further, the angle of the inclined plane is selected to correspond with the angles of the wedging surfaces 25 and 29 of the draw blocks 21 and 22. The strips 30 are attached to the edges of the panels by screws 49 extending through openings 50.

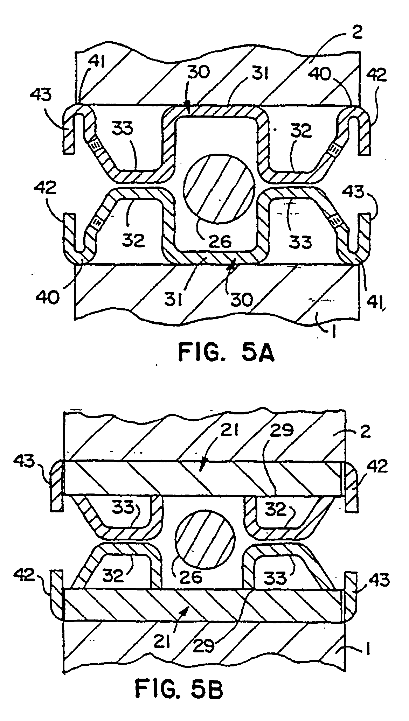

Referring to Figs. 5 and 5A, they disclose two panels 1 and 2 connected together by the hanger connector assembly including bracket/connector strips 30, one on each of the panels 1 and 2. As disclosed in Fig. 5, the strips are secured to the edges of the panels by screws 49 extending through openings 50 (Figs. 3 and 4) spaced along the strips from the upper end to the lower end. The connector assembly is located between the two strips 30 with the wedging surfaces 25 of the upper wedging draw block 21 inserted into the pockets 48 of the two strips 30. At the lower end of the panels, the wedging surfaces 29 of the lower wedging draw block 22 is inserted in the sockets 48c. As shown, the upper and lower wedging draw blocks 21 and 22 have been drawn toward each other by the tie rod 23 by screwing the screw member in a direction so as to draw the two wedging draw blocks toward each other. As these two wedging draw blocks are drawn toward each other, the wedging surfaces 29 and 25 engaging the inclined surfaces of the U-shaped protruding portions-draws the edges of the two panels 1 and 2 toward each other and securely holds them in the position as disclosed in Fig. 5A.

Figs. 8-12 disclose another embodiment of my invention. In this embodiment, the cross-sectional shape of the strip 30a is identical, except at the extreme ends. Therefore, many of the same reference numerals with the suffix "a" will be utilized in the description of this embodiment. Specifically, the U-shaped protruding portions 32a and 33a are cut square rather than at an inclined angle. Thus, hanger bracket/connector strip 30a includes a flat central portion 31a, U-shaped protruding portions 32a and 33a with slots 44a and 45a, reverse bent portions 40a and 41a, and flanges 42a and 43a. The shapes of the U-shaped protruding portions 32a and 33a are identical to the U-shaped protruding portions 32 and 33 of hanger bracket/connector strip 30. Accordingly, they include inner legs 34a and 35a, outer legs 36a and 37a, and webs 38a and 39a.

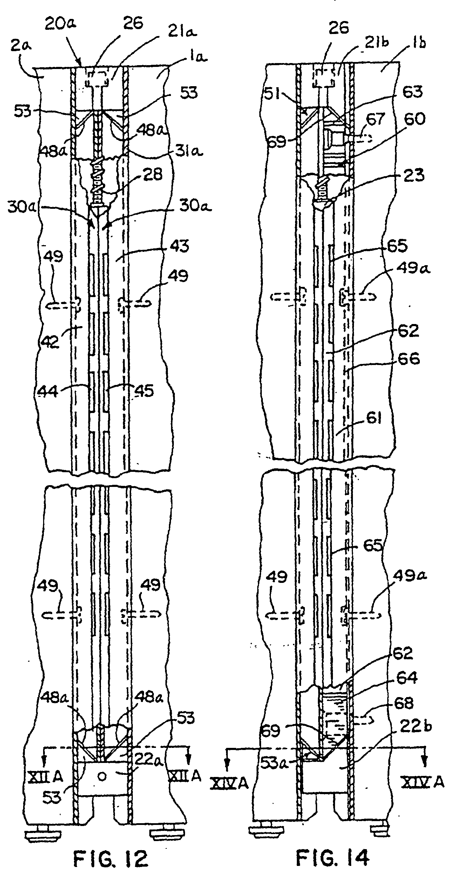

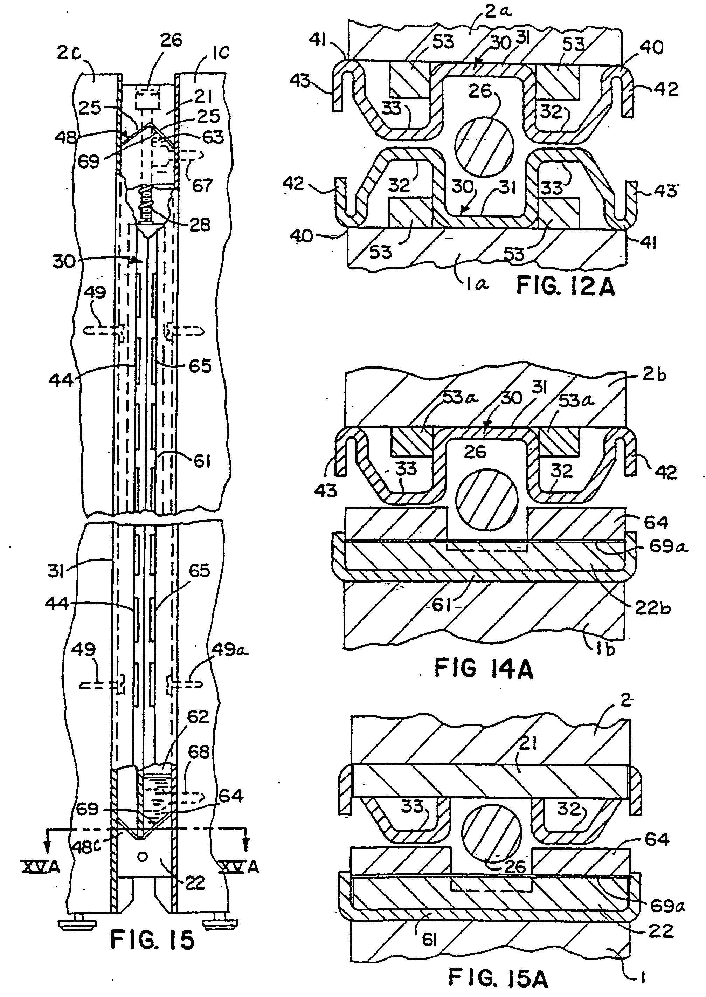

In the utilization of strip 30a, each strip includes two sockets 51 and 52. Socket 51 is formed between inner leg 34a and outer leg 36a. Socket 52 is formed between inner leg 35a and outer leg 37a. In the use of the hanger bracket/connector strip 30a, differently shaped upper and lower wedging draw blocks 21a and 22a are utilized. Fig. 11 discloses the construction and shape of an upper wedging draw block 21a. This draw block 21a includes four wedging elements 53, two on each side of the block and spaced to be received within sockets 51 and 52 formed between the legs of the U-shaped protruding portions 32a and 33a. The lower draw block (Fig. 12) is substantially identical in shape except for the connection of the block to the tie rod bar 23 which is identical to the connection between the tie rod 23 and lower wedging draw block 22 as illustrated in Fig. 1.

Referring to Figs. 12 and 12A, hanger bracket/connector strips 30a are shown attached to the edges of panels 1a and 2a by screws 49. Located between the two strips 30a is the connector assembly 20a comprising the upper wedging draw block 21a and the lower wedging draw block 22a, each of which include the wedging elements 53 having wedging surfaces. Wedging elements 53 are wedged into the sockets 51 and 52 formed between the inner leg 34a and outer leg 36a and inner leg 35a and outer leg 37a (Fig. 10). The two wedging draw blocks 21a and 22a are drawn toward each other by the tie rod or bar 23a in the manner as described above in relation to Figs. 1 and 5.

Having described the two embodiments of the hanger bracket/connector strips 30 and 30a, it may be necessary and/or desirable to join a panel which includes the strips 30 or 30a to an already existing panel which includes the interlock assembly as disclosed in U.S. Patent 3,430,997. Figs. 13-15 illustrate an arrangement for accommodating such a combination.

Figs. 13 and 14 illustrate such structure in which the panels 1b and 2b are connected together by use of the hanger bracket/connector strip 30a and the connector assembly 60 of U.S. Patent 3,430,997.

Fig. 13 discloses a specially designed upper wedging draw block 21b in which the wedging surface 29a is the same as the wedging surface 29 of Figs. 1 and 7. At the opposite side of the wedging draw block 21b is provided the spaced wedging elements 53a of the same configuration as the wedging elements 53 of Fig. 11. The wedging surface 29a is utilized to connect with the panel interlock assembly of U.S. Patent 3,430,997 whereas the wedge elements 53a are utilized to interfit within the sockets 51 and 52.

The combination of the hanger bracket/connector strip 30a and the connector and hanger bracket assembly of U.S. Patent 3,430,997 is illustrated in Figs. 14 and 14A. The assembly 60 of U.S. Patent 3,430,997 includes the U-shaped channel 61, the hanger bracket 62, the upper wedge block 63, and lower wedge block 64. The U-shaped channel 61 is secured to the edge of panel 1b and hanger bracket 62 which includes the slots 65 and is attached to the edge of panel 1b within the channel 61 by screws 49a extending through the central flat portion 66. Upper wedge block 63 is secured above bracket 62 within channel 61 to the edge of the panel 1b by the screws 67. Lower wedge block 64 is secured below bracket 62 also within channel 61 to the edge of panel 1b by screws 68. Thus, the connector and hanger bracket assembly 60 of U.S. Patent 3,430,997 is comprised of four parts including the channel 61, the hanger bracket 62, and the wedge blocks 63 and 64, all as disclosed in U.S. Patent 3,430,997, the disclosure of which is incorporated herein by reference.

In accordance with this invention, the hanger bracket/connector strip 30a, which has been previously described in relation to Figs. 8, 9, 10 and 12 is mounted on the edge of panel 2b in the same manner as described in relation to Fig. 12. In this combination, the upper wedging draw block 21b is located above strip 30a and the wedge block 63, and a similarly shaped wedging draw block 22b is located below strip 30a and the wedge block 64. The two wedging draw blocks 21a and 22b are drawn toward each other by the tie rod or bar 23 which forces the wedging surfaces 29a of the draw blocks 21b and 22b against the inclined wedging surfaces 69 of the wedge blocks 63 and 64.

As the upper and lower wedging draw blocks 21b and 22b are drawn toward each other, the wedging elements 53a are drawn into the sockets 51 and 52, both at the lower and upper ends of the hanger bracket/connector strip 30a, all as explained in relation to Fig. 12.

Fig. 15 discloses a combination of the connector assembly 60 of U.S. Patent 3,430,997 as previously described and the hanger bracket/connector strip 30. In this combination, the upper and lower wedging draw blocks 21 and 22 are utilized. Like that described in Fig. 14, the connector assembly 60 includes a channel-shaped member 61 attached to the edge of panel 1c. Also secured to the edge of panel 1c within the channel 67 is the hanger bracket 62, the upper wedge block 63, and the lower wedge block 64, all as described in relation to Fig. 14. Strip 30 is connected to the edge of panel 2c as previously described in relation to Fig. 5. In this combination, the upper wedging draw block 21 is mounted with the wedging surface located above the wedging surface 69 and located in socket 48 above the inclined surface of socket 48. - Also, wedging draw block 22 is mounted below wedging surface 69a and located in socket 48c below the inclined surface of socket 48c. Thus, when the tie rod 23 is adjusted to draw the two upper and lower wedging draw blocks 21 and 22 toward each other, the wedging surfaces thereof contact to draw the edges of the panels 1c and 2c together.

It will be evident from the above description that the present invention conceived more than 27 years after the development of the hanger bracket/connector assembly of U.S. Patent 3,430,997 has produced a remarkable result by providing in one piece that which over all the years has required four separate components that had to be manufactured separately and assembled separately on each of the edges of adjoining panels. Thus, in accordance with this invention, an unexpected and unusual result has been accomplished by this invention.

While a preferred embodiment of this invention has been illustrated in detail, it will be readily apparent to those skilled in the art that many other embodiments may be conceived and fabricated without departing from the scope of the following claims.

## Claims

1. A panel assembly including a hanger bracket/connector assembly (10) for connecting the opposing edges (3,4) of first and second panels (1,2) together and for hanging accessories thereon comprising first and second hanger bracket/connector strips (30); said first strip for mounting on one of said opposing edges (3) of said first panel and said second strip for mounting on the other edge (4) of said second panel; said first and second strips each being one piece and in cross section taken laterally between the ends thereof including a flat central portion (31) substantially located on a first plane X and engaging and attached to the edge of one of said panels, each strip having U-shaped protruding bent portions (32,33) on each side of said central portion integrally with and extending away from said flat central portion and said plane, said protruding bent portions each including an inner leg (34,35) extending away from said flat central portion and said first plane, an outer leg (36,37) spaced from said inner leg and extending toward said plane, said outer leg having longitudinally spaced slots (44,45) for receiving hooks whereby accessories can be supported on said strip, said inner and outer legs being connected by a web (38); the assembly also including upper (21) and lower (22) wedge mating members and an elongated tie bar (23) adjustably interconnected between said upper and lower wedging members and means (26) for drawing at least one of said wedging members toward the other wedging member; said strips having upper and lower ends with flat surfaces (47a,47b), said ends extending in a direction longitudinally away from said central portion; **characterised in that** the first and second hanger bracket/connector strips have a reverse bent portion (40,41) integral with said outer leg and flanges (42,43) integral with said reverse bent portion, said flanges extending away from said panel on which said strip is attached and located substantially on parallel planes on each side of said outer legs; said upper and lower ends of the strips are located on said first plane; said flanges extending along said flat surfaces and integral therewith; said protruding bent portions forming sockets (48) at their upper and lower ends; the upper and lower wedge mating members being configured to fit into and mate with said sockets; and wherein said means for drawing at least one of the wedging members toward the other wedging member forces the wedging members into the sockets.

2. A panel assembly as claimed in claim 1 in which said sockets (48) at the ends of said protruding bent portions (32,33) at both their upper and lower ends are formed by a cut-out along a plane Y inclined toward the longitudinal center of said strip; and said upper (21) and lower (22) wedging members include inclined surfaces (25,29) corresponding to the inclined angles of said cut-out.

3. A panel assembly as claimed in claim 1 in which said sockets (48) at the protruding bent portions (32,33) at both the upper and lower ends are formed by the spaces between the inner (34,35) and outer (36,37) legs of each of the protruding bent portions; and said upper (21) and lower (22) wedging members include spaced protruding wedging elements (53) extending into the sockets formed between said inner and outer legs, said protruding wedging elements having inclined surfaces (25,29) for drawing said edges (3,4) of said panels (1,2) toward each other as said wedging members are drawn toward each other by said elongated tie bar (23).

4. A panel assembly as claimed in claim 3 in which said hanger/bracket connector strips (30) for each panel are identical and four of said wedging protrusions (53) are provided, one for each of the sockets (48) formed by said protruding bent portions (32,33).

5. A panel assembly as claimed in claim 1 in which upper and lower wedging members (21,22) each have configured surfaces (25,29) on one side (3) adjacent said first panel (1) to fit into and mate with first upper and lower sockets (48) of said first hanger bracket/connector strip; a panel connector means (20) and a separate hanger bracket (30) for mounting on the said other edge (4) of said second panel (2), said panel connector means and separate hanger bracket means (62) including an elongated U-shaped channel (61), including a flat web attached to the edge of said second panel and having second parallel spaced flanges extending away from said flat web; a hanger bracket strip shorter than said first strip and attached to said edge of said second panel in said U-shaped channel between said second parallel spaced flanges whereby an upper space is located between the upper ends of said second strip and the upper end of said U-shaped channel and a lower space is located between the lower end of said second strip and the lower end of said channel; a separate upper wedging block (63) attached to said channel in said upper space and a separate lower wedging block (64) attached to said channel in said lower space; said upper and lower wedging members each having surfaces configured on their sides adjacent said second panel to fit into and mate with said second upper and lower sockets; an elongated tie bar (23) adjustable interconnected between said upper and lower wedging members; and means (26) for drawing at least one of said wedging members toward the other wedging member forcing said configured surfaces of said wedging members into said first and second upper and lower sockets.

6. A panel assembly as claimed in claim 5 in which said first upper and lower sockets (48) are formed by a cut-out along a plane Y, inclined toward the longitudinal center of said strip; and said upper (21) and lower (22) wedging members include inclined surfaces (25,29) corresponding to the inclined angles of said cut-out.

7. A panel assembly as claimed in claim 5 in which said first upper and lower sockets (48) are formed by the spaces between the inner (34,35) and outer (36,37) legs of each of the protruding bent portions (32,33) and said upper (21) and lower (22) wedging members include spaced protruding wedging elements (53) extending into the sockets formed between said inner and outer legs, said protruding wedging elements having inclined surfaces (25,29) for drawing said edges (3,4) of said panels (1,2) toward each as said wedging members are drawn toward each other by said elongated tie bar (23).

8. A panel assembly as claimed in claim 1 in which said sockets (48) at the protruding bent portions (32,33) at both the upper and lower ends are formed by the spaces between the inner (34,35) and outer (36,37) legs of each of the protruding bent portions for receiving spaced wedging protrusions (53) of a wedging member (21,22).

9. A panel assembly as claimed in claim 2 in which said sockets (48) are formed by a cut-out along a plane Y inclined toward the longitudinal centre of said strip for engagement by a corresponding inclined surface (25,29) of a wedging member (21,22).

## Patentansprüche

1. Paneelanordnung mit einer Hängehalterung/Verbinderanordnung (10) zur Verbindung der gegenüberliegenden Kanten (3, 4) von ersten und zweiten Paneelen (1, 2) und zum Aufhängen von Zubehör daran umfassend erste und zweite Hängehalterung/Verbinderleisten (30), wobei die erste Leiste zur Befestigung an einer der gegenüberliegenden Kanten (3) des ersten Paneels und die zweite Leiste zur Befestigung an der anderen Kante (4) des zweiten Paneels dient, die ersten und zweiten Leisten jeweils einstückig ausgebildet sind und im Querschnitt gesehen seitlich zwischen ihren Enden einen mittleren, flachen Bereich (31) aufweisen, der im Wesentlichen in einer ersten Ebene X angeordnet ist und an die Kanten eines der Paneele angelegt und befestigt ist, wobei jede Leiste U-förmig hervorstehende gebogene Bereiche (32, 33) auf jeder Seite des mittleren Bereiches aufweist, die mit dem mittleren Bereich einstückig ausgebildet sind und sich von diesem und der Ebene hinweg erstrecken, wobei jeder hervorstehende gebogene Bereich einen inneren Schenkel (34, 35), der sich von dem mittleren, flachen Bereich und der ersten Ebene hinweg erstreckt, und einen äußeren Schenkel (36, 37) aufweist, der von dem inneren Schenkel beabstandet ist und sich in Richtung der Ebene erstreckt, wobei der äußere Schenkel in Längsrichtung beabstandete Schlitze (44, 45) zur Aufnahme von Haken aufweist, womit Zubehör auf die Leiste abgestützt werden kann, die inneren und äußeren Schenkel mittels eines Stegs (38) verbunden sind, wobei die Anordnung auch obere (21) und untere (22) kuppelnde Keilbauteile und eine längsgestreckte Traverse (23) aufweist, die verstellbar zwischen den oberen und unteren Keilbauteilen verbunden ist, und Mittel (26) zum Ziehen mindestens eines der Keilbauteile in Richtung des anderen Keilbauteils, und die Leisten obere und untere Enden mit flachen Oberflächen (47a, 47b) aufweisen, die sich in eine Richtung längs von dem mittleren Bereich weg erstrecken, **dadurch gekennzeichnet, dass** die ersten und zweiten Hängehalterung/Verbinderleisten einen in umgekehrter Richtung gebogenen Schenkel (40, 41), der einstückig mit dem äußeren Schenkel ausgebildet ist, und Flansche (42, 43) aufweisen, die einstückig mit dem in umgekehrter Richtung gebogenen Bereich ausgebildet sind sich von dem Paneel weg erstrecken, auf welchem die Leiste befestigt und im Wesentlichen auf parallelen Ebenen auf jeder Seite der äußeren Schenkel angeordnet ist, wobei die oberen und unteren Enden der Leisten in der ersten Ebene angeordnet sind, die Flansche sich entlang der flachen Oberflächen erstrecken und mit diese einstückig ausgebildet sind, die hervorstehenden gebogenen Bereiche an ihren oberen und unteren Enden Aufnahmen (48) ausbilden, die oberen und unteren kuppelnden Keilbauteile derart ausgestaltet sind, um in die Aufnahmen hineinzupassen und mit ihnen zu kuppeln, wobei die Mittel zum Ziehen des mindestens einen Keilbauteils in Richtung des anderen Keilbauteils die Keilbauteile in die Aufnahmen hineinzwängen.

2. Paneelanordnung nach Anspruch 1, bei der die Aufnahmen (48) an den Enden der hervorstehenden gebogenen Bereiche (32, 33) an sowohl ihren oberen und unteren Enden durch eine Aussparung entlang einer, in Richtung des Längsmittelpunktes der Leisten geneigten Ebene Y gebildet werden und die oberen (21) und unteren (22) Keilbauteile geneigte Oberflächen (25, 29) aufweisen, die den Neigungswinkeln der Aussparung entsprechen.

3. Paneelanordnung nach Anspruch 1, in der die Aufnahmen (48) an den hervorstehenden gebogenen Bereichen (32, 33) an sowohl den oberen und unteren Enden durch Leerräume zwischen den inneren (34, 35) und den äußeren (36, 37) Schenkeln an jedem der hervorstehenden gebogenen Bereiche gebildet werden und die oberen (21) und unteren (22) Keilbauteile beabstandete, hervorstehende Keilelemente (53) umfassen, die sich in die Aufnahmen erstrecken, welche zwischen den inneren und äußeren Schenkeln ausgebildet sind, und hervorstehenden Keilelemente geneigte Oberflächen (25, 29) aufweisen, um die Kanten (3, 4) der Paneele (1, 2) in Richtung zueinander zu ziehen während die Keilbauteile durch die längsgestreckte Traverse (23) zueinander hingezogen werden.

4. Paneelanordnung nach Anspruch 3, in der die Hängehalterung/Verbinderleisten (30) für jedes Paneel identisch sind und vier Keilvorsprünge (53) vorgesehen sind, wobei jede Fassung (48) durch die hervorstehenden gebogenen Bereiche (32, 33) gebildet ist.

5. Paneelanordnung nach Anspruch 1, in der die oberen und unteren Keilbauteile (21, 22) jeweils Oberflächen (25, 29) auf einer Kante (3) benachbart dem ersten Paneel (1) aufweisen, die zum Eingreifen in und zum Kuppeln mit den ersten oberen und unteren Aufnahmen (48) der ersten Hängehalterung/Verbinderleiste konfiguriert sind, ein Paneelverbindungsmittel (20) und eine separate Hängehalterung (30) zum Befestigen an der anderen Kante (4) des zweiten Paneels vorgesehen ist, wobei das Paneelverbindungsmittel und separate Hängehalterungsmittel (62) eine längsgestreckte U-förmige Rinne (61) aufweisen, die einen flachen Steg aufweist, der mit der Kante des zweiten Paneels verbunden ist und zweite parallel beabstandete Flansche aufweist, die sich von dem flachen Steg weg erstrecken, eine Hängehalterungsleiste, die kürzer ist als die erste Leiste und mit der Kante des zweiten Paneels in der U-förmigen Rinne zwischen den zweiten parallel beabstandeten Flanschen befestigt ist, wodurch ein oberer Leerraum zwischen den oberen Enden der zweiten Leiste und dem oberen Ende der U-förmigen Rinne und ein unterer Leerraum zwischen dem unteren Ende der zweiten Leiste und dem unteren Ende der Rinne ausgebildet ist, ein separater oberer Keilblock (63) mit der Rinne in dem oberen Leerraum und ein separater unterer Keilblock (64) mit der Rinne in dem unteren Leerraum befestigt ist, wobei die oberen und unteren Keilbauteile jeweils auf ihren Seiten benachbart dem zweiten Paneel derart konfigurierte Oberflächen aufweisen, um in die zweiten oberen und unteren Aufnahmen einzugreifen und diesen zu kuppeln, eine längsgestreckte Traverse (23) zwischen oberen und unteren Keilbauteilen einstellbar verbunden ist, und Mittel (26) zum Ziehen des mindestens einen Keilbauteils in Richtung des anderen Keilbauteils vorgesehen sind, wodurch die konfigurierten Oberflächen der Keilbauteile in die ersten und zweiten oberen und unteren Aufnahmen gezwungen werden.

6. Paneelanordnung nach Anspruch 5, in der die oberen und unteren Aufnahmen (48) durch eine Aussparung entlang der Ebene Y gebildet werden, die in Richtung des Längsmittelpunkts der Leiste geneigt ist, und die oberen (21) und unteren (22) Keilbauteile geneigte Oberflächen (25, 29) aufweisen, die den Neigungswinkeln der Aussparung entsprechen.

7. Paneelanordnung nach Anspruch 5, in der die ersten oberen und unteren Aufnahmen (48) von Leerräumen zwischen den inneren (34, 35) und äußeren (36, 37) Schenkeln jedes hervorstehenden gebogenen Bereiches (32, 33) gebildet werden und die oberen (21) und unteren (22) Keilbauteile beabstandete hervorstehende Keilelemente (53) aufweisen, die sich in die Aufnahmen erstrecken, die zwischen den inneren und äußeren Schenkelen gebildet sind, wobei die hervorstehenden Keilelemente geneigte Oberflächen (25, 29) aufweisen, um die Kanten (3, 4) der Paneele (1, 2) in Richtung zueinander zu ziehen, während die Keilbauteile durch die längsgestreckte Traverse (23) aufeinander zugezogen werden.

8. Paneelanordnung nach Anspruch 1, in der die Aufnahmen (48) an den hervorstehenden gebogenen Bereichen (32, 33) sowohl an den oberen und unteren Enden durch die Leerräume zwischen den inneren (34, 35) und den äußeren (36, 37) Schenkel jedes hervorstehenden gebogenen Bereiches gebildet werden, um beabstandete Keilvorsprünge (53) eines Keilbauteils (21, 22) aufzunehmen.

9. Paneelanordnung nach Anspruch 2, in der die Aufnahmen (48) durch eine Aussparung entlang der Ebene Y gebildet werden, die in Richtung des Längsmittelpunktes der Leiste geneigt ist, um von einer entsprechend geneigten Oberfläche (25, 29) eines Keilbauteils (21, 22) gekuppelt zu werden.

## Revendications

1. Assemblage de panneaux comprenant un assemblage support de suspension/connecteur (10) pour raccorder l'une à l'autre les tranches opposées (3, 4) d'un premier et d'un second panneau (1, 2) et pour y suspendre des accessoires, comprenant une première et une seconde bande support de suspension/connecteur (30); ladite première bande pour être montée sur une desdites tranches opposées (3) dudit premier panneau et ladite seconde bande pour être montée sur l'autre tranche (4) dudit second panneau; lesdites première et seconde bandes étant chacune en une pièce et, en section transversale prise latéralement entre les extrémités de celle-ci, comprenant une partie centrale plane (31) essentiellement située dans un premier plan X et s'engageant et attachée à la tranche d'un desdits panneaux, chaque bande ayant des parties pliées en forme de U saillantes (32, 33) de chaque côté de ladite partie centrale, faisant partie intégrante de ladite partie centrale plane et s'étendant en s'écartant de celle-ci et dudit plan, lesdites parties pliées saillantes comprenant chacune une jambe intérieure (34, 35) s'étendant en s'écartant de ladite partie centrale plane et dudit premier plan, une jambe extérieure (36, 37) espacée de ladite jambe intérieure et s'étendant en direction dudit plan, ladite jambe extérieure ayant des logements espacés longitudinalement (44, 45) pour recevoir des crochets, ce par quoi des accessoires peuvent être supportés sur ladite bande, lesdites jambes intérieure et extérieure étant raccordées par une âme (38); l'assemblage comprenant également des éléments correspondants calants supérieur (21) et inférieur (22) et une barre de liaison allongée (23) raccordée de façon ajustable entre lesdits éléments calants supérieur et inférieur, et un moyen (26) pour tirer au moins un desdits éléments calants vers l'autre élément calant; lesdites bandes ayant des extrémités supérieure et inférieure avec des surfaces planes (47a, 47b), lesdites extrémités s'étendant dans une direction s'écartant longitudinalement de ladite partie centrale; **caractérisé en ce que** les première et seconde bandes support de suspension/connecteur ont une partie pliée à l'envers (40, 41) faisant partie intégrante desdites jambes extérieures, et des brides (42, 43) faisant partie intégrante avec ladite partie pliée à l'envers, lesdites brides s'étendant en s'écartant dudit panneau sur lequel ladite bande est fixée, et étant localisées essentiellement en des plans parallèles de chaque côté desdites jambes extérieures; lesdites extrémités supérieure et inférieure des bandes sont situées sur ledit premier plan; lesdites brides s'étendant le long desdites surfaces planes et faisant partie intégrante avec celles-ci; lesdites parties pliées saillantes formant des cavités (48) en leurs extrémités supérieure et inférieure; les éléments calants correspondants supérieur et inférieur étant configurés pour s'emboîter dans lesdites cavités et s'y adapter, et dans lequel ledit moyen pour tirer au moins un des éléments calants vers l'autre élément calant force les éléments calants dans les cavités.

2. Assemblage de panneaux selon la revendication 1 dans lequel lesdites cavités (48) aux extrémités desdites parties pliées saillantes (32, 33) sont, à chacune de leurs extrémités supérieure et inférieure, formées par une découpe le long d'un plan Y incliné vers le centre longitudinal desdites bandes; et lesdits éléments calants supérieur (21) et inférieur (22) comprennent des surfaces inclinées (25, 29) correspondant aux angles inclinés desdites découpes.

3. Assemblage de panneaux selon la revendication 1 dans lequel lesdites cavités (48) aux parties pliées saillantes (32, 33) aux deux extrémités supérieure et inférieure sont formées par les espaces entre les jambes intérieures (34, 35) et extérieures (36, 37) de chacune des parties pliées saillantes; et lesdits éléments calants supérieur (21) et inférieur (22) comprennent des éléments calants saillants espacés (53) s'étendant dans les cavités formées entre lesdites jambes intérieure et extérieure, lesdits éléments calants saillants ayant des surfaces inclinées (25, 29) pour tirer lesdites tranches (3, 4) desdits panneaux (1, 2) l'une vers l'autre quand lesdits éléments calants sont tirés l'un vers l'autre par ladite barre de liaison allongée (23).

4. Assemblage de panneaux selon la revendication 3 dans lequel lesdites bandes support de suspension/connecteur (30) pour chaque panneau sont identiques et quatre desdites saillies calantes (53) sont pourvues, une pour chacune des cavités (48) formées par lesdites parties pliées saillantes (32, 33).

5. Assemblage de panneaux selon la revendication 1 dans lequel les éléments calants supérieur et inférieur (21, 22) ont chacun des surfaces configurées (25, 29) sur un côté (3) adjacent audit premier panneau (1) pour s'emboîter dans les premières cavités supérieure et inférieure (48) de ladite première bande support de suspension/connecteur et s'y adapter; un moyen de raccordement de panneaux (20) et un support de suspension séparé (30) pour montage sur ladite autre tranche (4) dudit second panneau (2), lesdits moyens de raccordement de panneaux et moyen support de suspension séparé (62) comprenant un canal allongé en forme de U (61), comprenant une âme plane attachée à la tranche dudit second panneau et ayant des secondes brides parallèles espacées s'étendant en s'écartant de ladite âme plane; une bande support de suspension plus courte que ladite première bande et attachée à ladite tranche dudit second panneau dans ledit canal en forme de U entre lesdites secondes brides parallèles espacées, ce par quoi un espace supérieur est situé entre les extrémités supérieures de ladite seconde bande et l'extrémité supérieure dudit canal en forme de U et un espace inférieur est situé entre l'extrémité inférieure de ladite seconde bande et l'extrémité inférieure dudit canal; un bloc de calage supérieur séparé (63) attaché audit canal dans ledit espace supérieur et un bloc de calage inférieur séparé (64) attaché audit canal dans ledit espace inférieur; lesdits éléments calants supérieur et inférieur ayant chacun des surfaces configurées sur leurs côtés adjacents audit second panneau pour s'emboîter dans lesdites secondes cavités supérieure et inférieure et s'y adapter; une barre de liaison allongée (23) ajustable interconnectée entre lesdits éléments calants supérieur et inférieur; et un moyen (26) pour tirer au moins un desdits éléments calants vers l'autre élément calant, forçant lesdites surfaces configurées desdits éléments calants dans lesdites première et seconde cavités supérieure et inférieure.

6. Assemblage de panneaux selon la revendication 5, dans lequel lesdites premières cavités supérieure et inférieure (48) sont formées par une découpe le long d'un plan Y incliné vers le centre longitudinal de ladite bande; et lesdits éléments calants supérieur (21) et inférieur (22) comprennent des surfaces inclinées (25, 29) correspondant aux angles inclinés de ladite découpe.

7. Assemblage de panneaux selon la revendication 5 dans lequel lesdites premières cavités supérieure et inférieure (48) sont formées par les espaces entre les jambes intérieures (34, 35) et extérieures (36, 37) de chacune des parties pliées saillantes (32, 33), et lesdits éléments calants supérieur (21) et inférieur (22) comprennent des éléments calants saillants espacés (53) s'étendant dans les cavités formées entre lesdites jambes intérieures et extérieures, lesdits éléments calants saillants ayant des surfaces inclinées (25, 29) pour tirer lesdites tranches (3, 4) desdits panneaux (1, 2) l'une vers l'autre quand lesdits éléments calants sont tirés l'un vers l'autre par ladite barre de liaison allongée (23).

8. Assemblage de panneaux selon la revendication 1 dans lequel lesdites cavités (48) aux parties pliées saillantes (32, 33) aux deux extrémités supérieure et inférieure sont formées par les espaces entre les jambes intérieures (34, 35) et extérieures (36, 37) de chacune des parties pliées saillantes, pour recevoir des saillies calantes espacées (53) d'un élément calant (21, 22).

9. Assemblage de panneaux selon la revendication 2 dans lequel lesdites cavités (48) sont formées par une découpe le long d'un plan Y incliné vers le centre longitudinal de ladite bande pour être engagées par une surface inclinée correspondante (25, 29) d'un élément calant (21, 22).
